# EUROPEAN PATENT APPLICATION

(11) **EP 4 574 495 A1**
(43) Date of publication of application: **25.06.2025**
(21) Application number: 24220353.7
(22) Date of filing: 16.12.2024
(51) Int. Cl.: B60K 1/04, B62D 21/15, B62D 25/02

(54) **VEHICLE LOWER BODY STRUCTURE**

(30) Priority: 22.12.2023 JP 2023217307
(71) Applicant: TOYOTA JIDOSHA KABUSHIKI KAISHA, Aichi-ken, 471-8571 (JP)
(72) Inventor: SHIRAI, Yasuhiro, TOYOTA-SHI, AICHI-KEN, 471-8571 (JP); HIRAKAWA, Katsuichiro, TOYOTA-SHI, AICHI-KEN, 471-8571 (JP); MAEDA, Hirokazu, TOYOTA-SHI, AICHI-KEN, 471-8571 (JP); MIYATAKE, Junya, TOYOTA-SHI, AICHI-KEN, 471-8571 (JP); NISHIKAWA, Yuki, TOYOTA-SHI, AICHI-KEN, 471-8571 (JP)
(74) Representative: Cabinet Beau de Loménie

(57) **Abstract**

A vehicle lower body structure, includes a battery (35) disposed at a vehicle lower side relative to a vehicle cabin (16); a frame (22, 38) disposed at an outer side, in a vehicle width direction, of the battery (35), a position in a height direction of a part of the frame (22, 38) overlapping with the battery when viewed in the vehicle width direction; and an impact absorption member (48, 54, 74) provided inside the frame (22, 38) and including closed cross-sectional structural units (56, 76) whose cross-sectional shapes, when viewed in the vehicle width direction, are closed cross-sections, the closed cross-sectional structural units (56, 92, 76) extending in the vehicle width direction.

## Description

### BACKGROUND

### Technical Field

The present disclosure relates to a vehicle lower body structure.

### Related Art

Japanese Patent Application Laid-open (JP-A) No. 2023-080379 discloses an invention relating to a vehicle lower body structure. In this vehicle lower body structure, the inside of a rocker is divided by plural partition walls, whereby impact absorption members are formed inside the rocker. Additionally, the impact absorption members can absorb an impact load in the vehicle width direction.

### SUMMARY

However, in the above-described related art, the impact absorption members extend in the vehicle front-rear direction, and when an impact load in the vehicle width direction is input, it becomes difficult to maintain the cross-sectional shapes of the impact absorption members.

As a result, as deformation of the impact absorption members progresses, it is conceivable that the impact energy that can be absorbed per unit length of the impact absorption members in the vehicle width direction will become smaller. Namely, the above-described related art has room for improvement in terms of ensuring the magnitude of impact energy that can be absorbed per unit length, in the vehicle width direction, of the impact absorption members with respect to an impact load input in the vehicle width direction.

In consideration of the above-described circumstances, the present disclosure obtains a vehicle lower body structure that can ensure the magnitude of impact energy that can be absorbed per unit length in the vehicle width direction with respect to an impact load in the vehicle width direction.

A vehicle lower body structure pertaining to a first aspect includes: a battery disposed at a vehicle lower side relative to a vehicle cabin; a frame disposed at an outer side, in a vehicle width direction, of the battery, a position in a height direction of a part of the frame overlapping with the battery when viewed in the vehicle width direction; and an impact absorption member provided inside the frame and including closed cross-sectional structural units whose cross-sectional shapes, when viewed in the vehicle width direction, are closed cross-sections, the closed cross-sectional structural units extending in the vehicle width direction.

According to the vehicle lower body structure pertaining to the first aspect, the battery is disposed at the vehicle lower side relative to the vehicle cabin. The frame is disposed at the outer side, in the vehicle width direction, of the battery, the position in the height direction of the part of the frame overlaps with the battery when viewed in the vehicle width direction. In a case in which an impact load in the vehicle width direction is input, the impact load becomes input to the frame before the battery.

From the standpoint of protecting the battery, it is preferred that the vehicle lower body structure have a configuration such that the frame is able to absorb an impact in the vehicle width direction. For example, it is conceivable to employ a configuration that at inside of the rocker is divided by plural partition wall portions extending in the vehicle front-rear direction to form impact absorption members inside the rocker.

However, in this configuration, it becomes difficult to maintain the cross-sectional shapes of the impact absorption members with respect to an impact load in the vehicle width direction because the impact absorption members extend in the vehicle front-rear direction. As a result, as deformation of the impact absorption members progresses, it is conceivable that the impact energy that can be absorbed per unit length of the impact absorption members in the vehicle width direction will become smaller. Namely, in this configuration, it becomes difficult to ensure the magnitude of impact energy that can be absorbed per unit length, in the vehicle width direction, of the impact absorption members with respect to an impact load in the vehicle width direction.

In the present aspect, the impact absorption member provided inside the frame includes the closed cross-sectional structural units whose cross-sectional shapes when viewed in the vehicle width direction are closed cross-sections and which extend in the vehicle width direction.

When an impact load in the vehicle width direction is input to the frame, the closed cross-sectional structural units compressively deform in the direction in which the impact load was input, that is, the direction in which the closed cross-sectional structural units extend and can absorb the impact load. Additionally, the cross-sectional shapes of inner parts, in the vehicle width direction, of the closed cross-sectional structural units are maintained even when deformation of the impact absorption member progresses, so the impact energy that can be absorbed per unit length of the impact absorption member in the vehicle width direction can be inhibited from becoming smaller.

A vehicle lower body structure pertaining to a second aspect is the vehicle lower body structure pertaining to the first aspect, wherein the frame comprises a rocker that configures a part of a vehicle body lower portion and extends in the vehicle front-rear direction, and the impact absorption member is provided inside the rocker.

According to the vehicle lower body structure pertaining to the second aspect, the impact absorption member is provided inside the rocker that configures a part of the vehicle body lower portion and extends in the vehicle front-rear direction. The impact absorption member can be disposed without ensuring a separate space in the vehicle body, and the space for disposing the battery can be inhibited from being encroached upon by the impact absorption member.

A vehicle lower body structure pertaining to a third aspect is the vehicle lower body structure pertaining to the first aspect or the second aspect, wherein the impact absorption member includes a reinforcement panel made of metal and is bent in the vehicle front-rear direction.

According to the vehicle lower body structure pertaining to the third aspect, the impact absorption member includes the reinforcement panel made of metal and is bent in the vehicle front-rear direction. The closed cross-sectional structural units can be configured by joining reinforcement panels or the reinforcement panel and the frame to each other. As a result, in the present aspect, the configuration of the impact absorption member can be inhibited from becoming complicated, and flexibility for the configuration of the impact absorption member can be ensured.

A vehicle lower body structure pertaining to a fourth aspect is the vehicle lower body structure pertaining to the third aspect, wherein the reinforcement panel includes an upper panel configuring a vehicle upper part of the impact absorption member and a lower panel configuring a vehicle lower part of the impact absorption member, the upper panel is configured by a plurality of upper constituent portions, each having a predetermined cross-sectional shape that is convex in a vehicle upward direction and open in a vehicle downward direction when viewed in the vehicle width direction, the upper constituent portions being arrayed in the vehicle front-rear direction, the lower panel is configured by a plurality of lower constituent portions, each having a predetermined cross-sectional shape that is convex in the vehicle downward direction and open in the vehicle upward direction when viewed in the vehicle width direction, the lower constituent portions being arrayed in the vehicle front-rear direction, with the convex shapes of the upper constituent portions and the convex shapes of the lower constituent portions overlapping with each other when viewed in a vehicle up-down direction, and a plurality of the closed cross-sectional structural units including the upper constituent portions and the lower constituent portions interconnected in the vehicle up-down direction, as a result of the upper panel and the lower panel being joined to each other, the plurality of the closed cross-sectional structural units are arrayed in the vehicle front-rear direction.

According to the vehicle lower body structure pertaining to the fourth aspect, the vehicle upper part of the impact absorption member is configured by the upper panel, and the vehicle lower part of the impact absorption member is configured by the lower panel.

The upper panel is configured by the plurality of upper constituent portions, each having a predetermined cross-sectional shape that is convex in the vehicle upward direction and open in the vehicle downward direction when viewed in the vehicle width direction, the upper constituent portions being arrayed in the vehicle front-rear direction. The lower panel is configured by the plurality of lower constituent portions, each having a predetermined cross-sectional shape that is convex in the vehicle downward direction and open in the vehicle upward direction when viewed in the vehicle width direction, and the lower constituent portions overlap with the upper constituent portions when viewed in the vehicle up-down direction, the lower constituent portions being arrayed in the vehicle front-rear direction.

The closed cross-sectional structural units are configured to include the upper constituent portions and the lower constituent portions interconnected in the vehicle up-down direction as a result of the upper panel and the lower panel being joined to each other, and the plurality of closed cross-sectional structural units are configured by being arrayed in the vehicle front-rear direction. In the present aspect, the plurality of closed cross-sectional structural units can be configured by the upper panel and the lower panel, that is, two panels, which contributes to a reduction in the number of parts.

A vehicle lower body structure pertaining to a fifth aspect is the vehicle lower body structure pertaining to any one of the second aspect to the fourth aspect, wherein the closed cross-sectional structural units are distributed at a higher density at a position at which the rocker overlaps in the height direction, when viewed in the vehicle width direction, with at least one of a cross member, which configures a part of the vehicle body lower portion and which extends in the vehicle width direction, or a reinforcement member, which configures a part of a battery case for the battery and which extends in the vehicle width direction.

According to the vehicle lower body structure pertaining to the fifth aspect, at the position at which the rocker overlaps in the height direction, when viewed in the vehicle width direction, with at least one of the cross member, which configures a part of the vehicle body lower portion and which extends in the vehicle width direction, or the reinforcement member, which configures a part of a battery case for the battery and which extends in the vehicle width direction, the distribution density of the closed cross-sectional structural units is high.

In the present aspect, at the above-described position at the rocker, rigidity for the impact absorption member with respect to an impact load in the vehicle width direction can be ensured. Additionally, at the above-described position at the rocker, an impact load in the vehicle width direction input to the rocker can be transmitted via the impact absorption member to at least one of the cross member of the vehicle body lower portion or the reinforcement member of the battery case. The impact load input to the rocker can be dispersed to at least one of the vehicle body lower portion or the battery case.

A vehicle lower body structure pertaining to a sixth aspect is the vehicle lower body structure pertaining to the third aspect, wherein the impact absorption member includes the reinforcement panel, which is bent in a zigzag shape when viewed in the vehicle width direction.

According to the vehicle lower body structure pertaining to the sixth aspect, apex portions of the reinforcement panel bent in a zigzag shape can be joined to the frame. Effects on the frame caused by joining the reinforcement panel and the frame to each other can be reduced, and a plurality of closed cross-sectional structural units that are triangular when viewed in the vehicle width direction can be configured by the reinforcement panel and the frame.

A vehicle lower portion structure pertaining to a seventh aspect is the vehicle lower body structure pertaining to the third aspect, wherein the impact absorption member includes the reinforcement panel, which is bent in a square wave shape when viewed in the vehicle width direction.

According to the vehicle lower body structure pertaining to the seventh aspect, parts of the reinforcement panel, which is bent in a square wave shape and whose thickness direction coincides with the vehicle up-down direction, can be joined to the frame. In this aspect, the area of the parts at which the reinforcement panel and the frame are joined to each other can be ensured, and a plurality of closed cross-sectional structural units that are rectangular when viewed in the vehicle width direction can be configured by the reinforcement panel and the frame.

A vehicle lower body structure pertaining to an eighth aspect is the vehicle lower body structure pertaining to the third aspect, wherein the impact absorption member includes the reinforcement panel, which is bent in a wavy line shape when viewed in the vehicle width direction.

According to the vehicle lower body structure pertaining to the eighth aspect, apex portions of the reinforcement panel, which is bent in a wavy line shape, can be joined to the frame, so effects on the frame caused by joining the reinforcement panel and the frame to each other can be reduced, and a plurality of closed cross-sectional structural units can be configured by the reinforcement panel and the frame. Furthermore, in the present aspect, corner portions can be inhibited from forming in the reinforcement panel when viewed in the vehicle width direction, and portions at which stress concentrates can be inhibited from forming in the reinforcement panel.

A vehicle lower body structure pertaining to a ninth aspect is the vehicle lower body structure pertaining to any one of the second aspect to the eighth aspect, wherein the rocker includes a rocker outer panel that configures a vehicle width direction outer part of the rocker and a rocker inner panel that configures a vehicle width direction inner part of the rocker, and the reinforcement panel is joined to the rocker outer panel or the rocker inner panel.

According to the vehicle lower body structure pertaining to the ninth aspect, the reinforcement panel is joined to the rocker outer panel that configures the vehicle width direction outer part of the rocker or the rocker inner panel that configures the vehicle width direction inner part of the rocker. The reinforcement panel can be supported in a stable state relative to the rocker. Furthermore, in the present aspect, the rocker outer panel and the rocker inner panel can be joined to each other after the reinforcement panel is joined to the rocker outer panel or the rocker inner panel, so the process of manufacturing the rocker can be inhibited from being changed.

As described above, the vehicle lower body structure pertaining to the present disclosure has the effect that it can ensure the magnitude of impact energy that can be absorbed per unit length, in the vehicle width direction, of the impact absorbing member with respect to an impact load in the vehicle width direction.

### BRIEF DESCRIPTION OF THE DRAWINGS

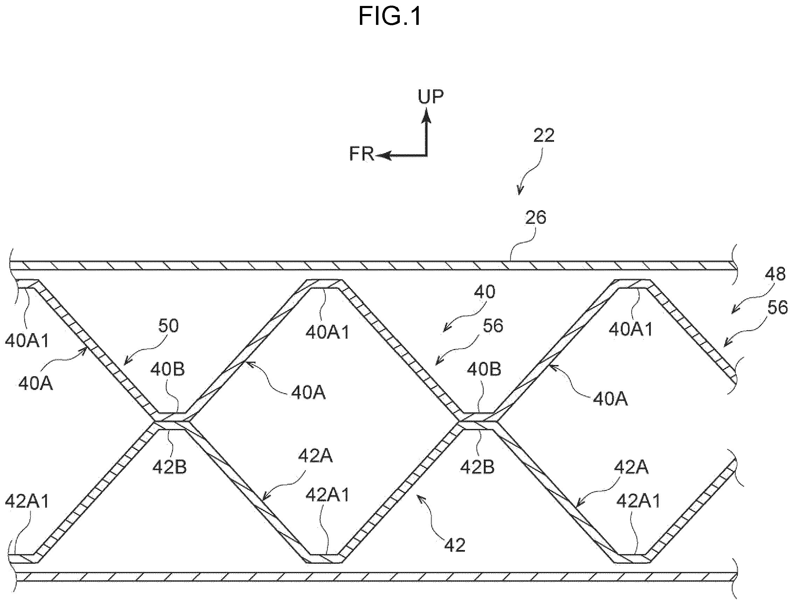

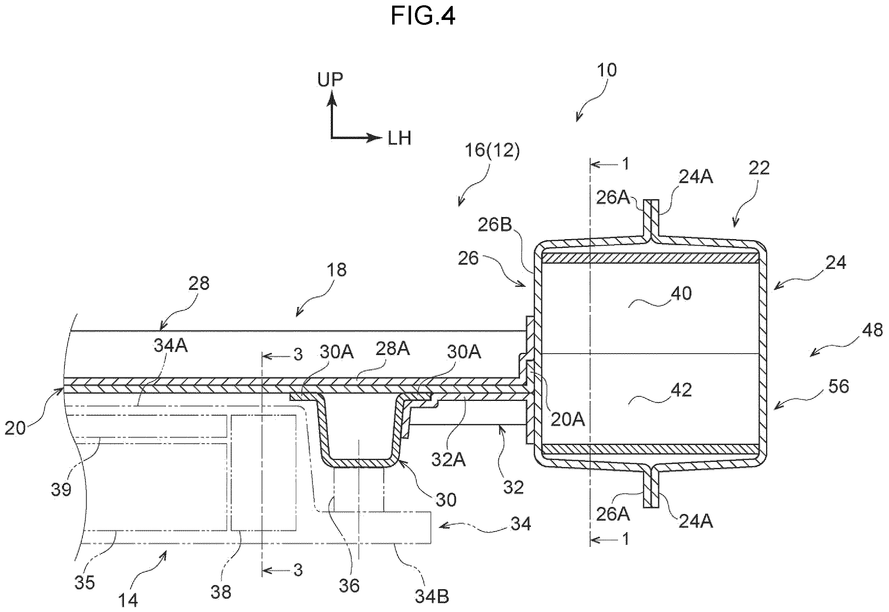

FIG. 1 is an enlarged cross-sectional view, as viewed from an outer side in a vehicle width direction, schematically showing configurations of main parts of a vehicle body of a vehicle to which a vehicle lower body structure pertaining to a first embodiment has been applied (a cross-sectional view showing a state in which the vehicle body is cut along line 1-1 of FIG. 4);

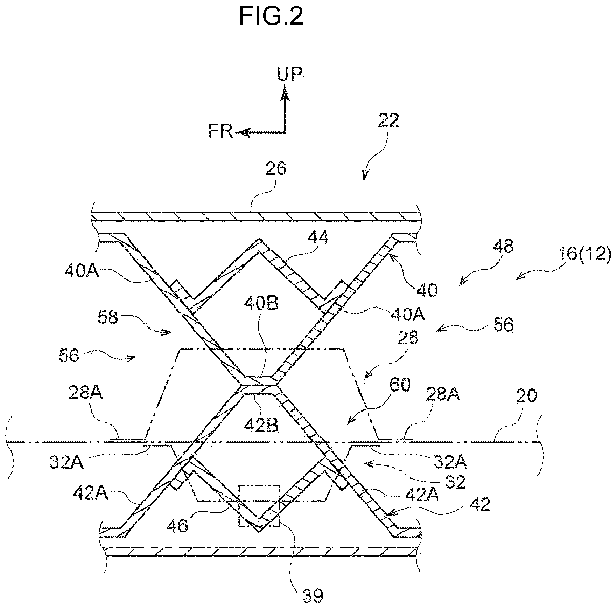

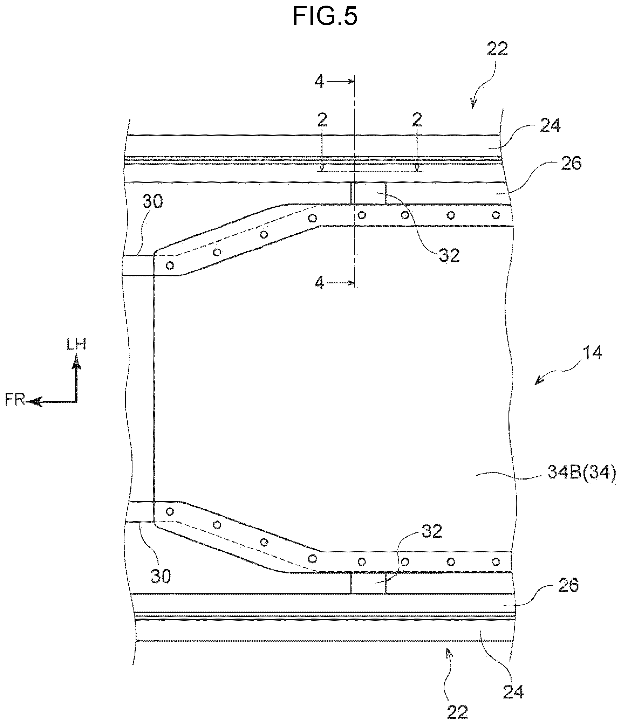

FIG. 2 is an enlarged cross-sectional view, as viewed from an outer side in the vehicle width direction, schematically showing configurations of main parts of the vehicle body of the vehicle to which the vehicle lower body structure pertaining to the first embodiment has been applied (a cross-sectional view showing a state in which the vehicle body is cut along line 2-2 of FIG. 5);

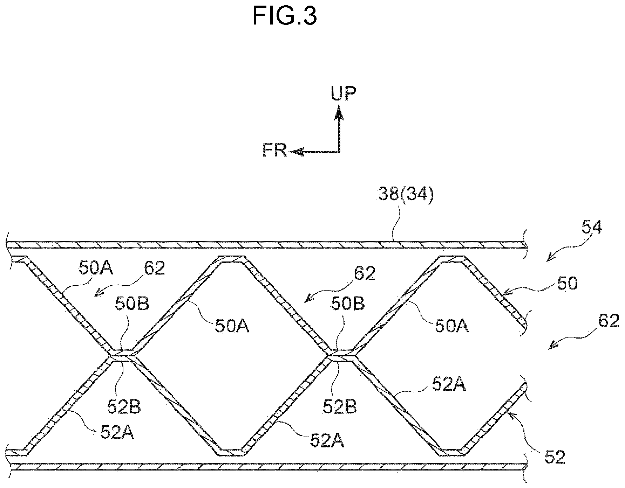

FIG. 3 is an enlarged cross-sectional view, as viewed from outer side in the vehicle width direction, schematically showing configurations of main parts of a battery case of a battery pack installed in the vehicle to which the vehicle lower body structure pertaining to the first embodiment has been applied (a cross-sectional view showing a state in which the battery case is cut along line 3-3 of FIG. 4);
FIG. 4 is a cross-sectional view, as viewed from the vehicle front side, schematically showing configurations on a vehicle body lower portion side of the vehicle to which the vehicle lower body structure pertaining to the first embodiment has been applied (a cross-sectional view showing a state in which the vehicle body lower portion is cut along line 4-4 of FIG. 5);
FIG. 5 is a bottom view schematically showing configurations of the vehicle to which the vehicle lower body structure pertaining to the first embodiment has been applied;

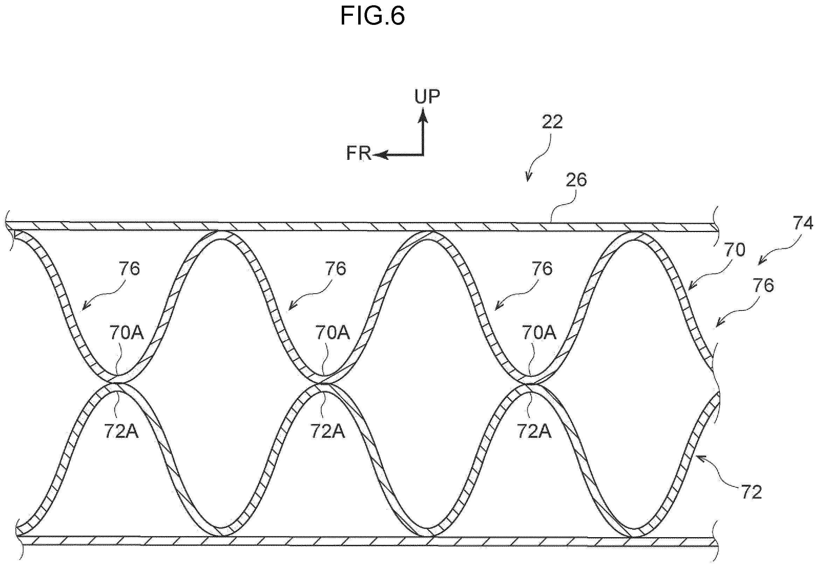

FIG. 6 is a cross-sectional view, as viewed from outer side in the vehicle width direction, schematically showing configurations of main parts of the vehicle body of the vehicle to which a vehicle lower body structure pertaining to a second embodiment has been applied (a cross-sectional view corresponding to FIG. 1);

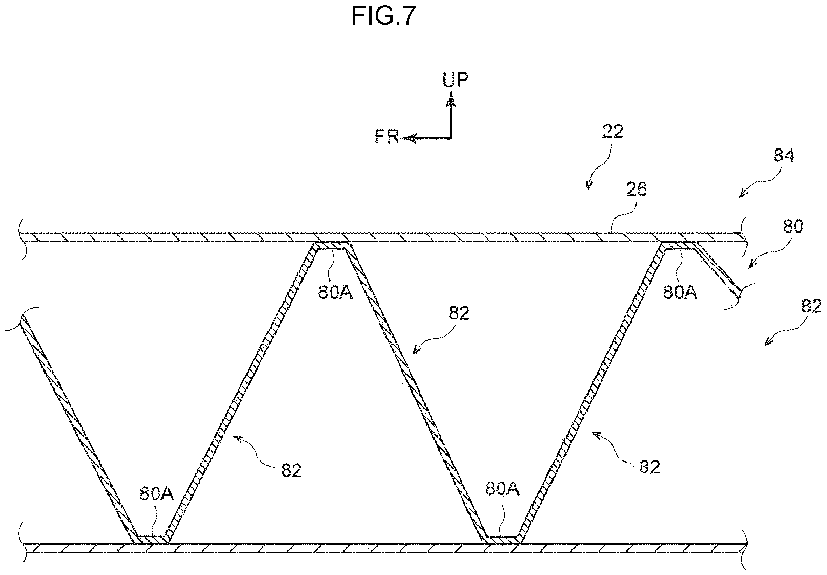

FIG. 7 is a cross-sectional view, as viewed from outer side in the vehicle width direction, schematically showing configurations of main parts of the vehicle body of the vehicle to which a vehicle lower body structure pertaining to a third embodiment has been applied (a cross-sectional view corresponding to FIG. 1);

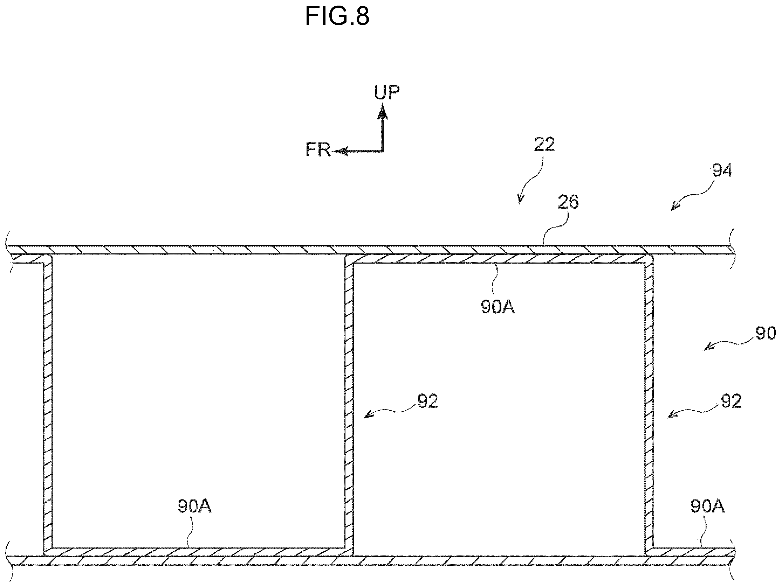

FIG. 8 is a cross-sectional view, as viewed from outer side in the vehicle width direction, schematically showing configurations of main parts of the vehicle body of the vehicle to which a vehicle lower body structure pertaining to a fourth embodiment has been applied (a cross-sectional view corresponding to FIG. 1); and

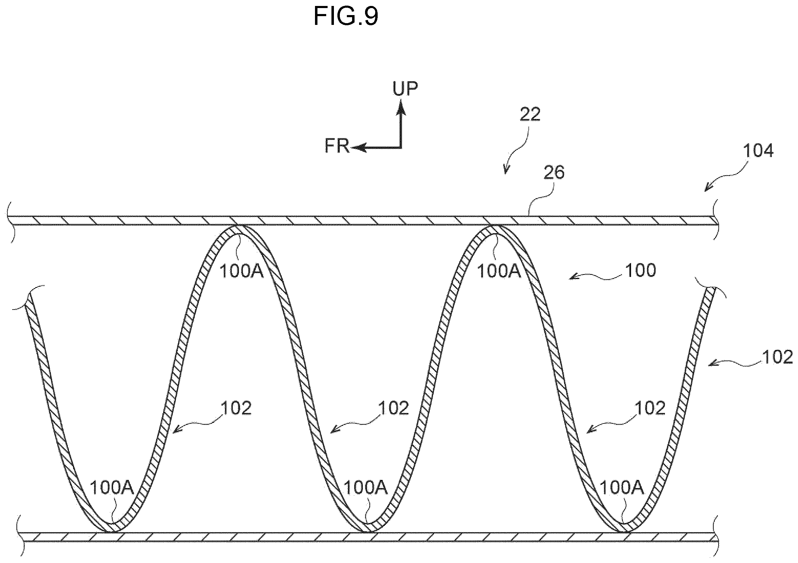

FIG. 9 is a cross-sectional view, as viewed from outer side in the vehicle width direction, schematically showing configurations of main parts of the vehicle body of the vehicle to which a vehicle lower body structure pertaining to a fifth embodiment has been applied (a cross-sectional view corresponding to FIG. 1).

### DETAILED DESCRIPTION

### <First Embodiment>

A first embodiment of the vehicle lower body structure pertaining to the present disclosure will be described below using FIG. 1 to FIG. 5. It will be noted that arrow FR appropriately shown in the drawings indicates a vehicle forward direction, arrow UP indicates a vehicle upward direction, and arrow LH indicates a leftward direction in a vehicle width direction.

First, schematic configurations of a vehicle 10 to which the vehicle lower body structure pertaining to the present embodiment has been applied will be described using FIG. 4 and FIG. 5. It will be noted that in the present embodiment the vehicle 10 basically has a bilaterally symmetrical configuration, so mainly configurations of a left part, in a vehicle width direction, of the vehicle 10 will be described below, and description of a right part in the vehicle width direction will be omitted as appropriate.

The vehicle 10 is configured to include a vehicle body 12, a power unit such as a motor (not shown in the drawings) installed in the vehicle 10, and a battery pack 14 attached to the vehicle body 12. The power unit is driven upon receiving a supply of power from the battery pack 14, and the vehicle 10 travels on driving power generated by the power unit.

The vehicle body 12 includes a cabin 16, and a vehicle lower part of the cabin 16 is configured by a floor portion 18 serving as a vehicle body lower portion. The floor portion 18 is configured to include a floor panel 20, rockers 22 serving as frames, cross members 28, side members 30, and reinforcement members 32.

Specifically, the floor panel 20 is formed by pressing a steel sheet and extends in a vehicle front-rear direction and in the vehicle width direction when viewed from a vehicle up -down direction. Additionally, at outer sides, in the vehicle width direction, of the floor panel 20, a left-right pair of the rockers 22 are disposed along outer edge portions, in the vehicle width direction, of the floor panel 20.

The rockers 22 are made of steel, extend in the vehicle front-rear direction, and are each configured to include a rocker outer panel 24 that configures a vehicle width direction outer part of the rocker 22 and a rocker inner panel 26 that configures a vehicle width direction inner part of the rocker 22.

Specifically, a cross-sectional shape of the rocker outer panel 24 when viewed in the vehicle front-rear direction is configured in the shape of a hat that opens inwardly in the vehicle width direction. A cross-sectional shape of the rocker inner panel 26 when viewed in the vehicle front-rear direction is configured in the shape of a hat that opens outwardly in the vehicle width direction. Additionally, flange portions 24A of the rocker outer panel 24 and flange portions 26A of the rocker inner panel 26 are joined to each other by joints (not shown in the drawings) formed by welding or the like, so that the rocker 22 has a closed cross-sectional structure whose cross-sectional shape when viewed in the vehicle front-rear direction is a substantially hexagonal closed cross-section.

It will be noted that vehicle width direction outer end portions 20A of the floor panel 20 are joined by joints (not shown in the drawings) formed by welding or the like to side wall portions 26B that configure vehicle width direction inner parts of the rocker inner panels 26.

The cross members 28 are made of steel and extend in the vehicle width direction, and plural cross members 28 are disposed spaced apart from each other in the vehicle front-rear direction at a vehicle upper side of the floor panel 20. The cross members 28 bridge the rockers 22, the cross-sectional shape of each of the cross members 28 when viewed in the vehicle width direction is configured in a shape of a hat that opens in a vehicle downward direction as shown also in FIG. 2, and flange portions 28A of the cross members 28 are joined to the floor panel 20 and the rocker inner panels 26 by joints (not shown in the drawings) formed by welding or the like.

Furthermore, the cross members 28 configure with the floor panel 20 closed cross-sectional structural units as a result of being joined to the floor panel 20.

The side members 30 are made of steel, extend in the vehicle front-rear direction, and are disposed at both sides, in the vehicle width direction, of the floor panel 20 at a vehicle lower side of the floor panel 20. It will be noted that the side members 30 are positioned inwardly in the vehicle width direction relative to the rockers 22.

A cross-sectional shape of each of the side members 30 when viewed in the vehicle front-rear direction is configured in the shape of a hat that opens in a vehicle upward direction, and flange portions 30A of the side members 30 are joined to the floor panel 20 by joints (not shown in the drawings) formed by welding or the like. Additionally, the side members 30 configure with the floor panel 20 closed cross-sectional structural units as a result of being joined to the floor panel 20.

The reinforcement members 32 are made of steel, extend in the vehicle width direction, and are disposed at a vehicle lower side of the floor panel 20 so as to overlap with the cross members 28 when viewed in the vehicle up-down direction as shown also in FIG. 2.

The reinforcement members 32 bridge the rockers 22 and the side members 30, a cross-sectional shape of each of the reinforcement members 32 when viewed in the vehicle width direction is configured in a shape of a hat that opens in the vehicle upward direction, and flange portions 32A of the reinforcement members 32 are joined to the floor panel 20, the rockers 22, and the side members 30 by joints (not shown in the drawings) formed by welding or the like.

Furthermore, the reinforcement members 32 configure with the floor panel 20 closed cross-sectional structural units as a result of being joined to the floor panel 20.

Additionally, the battery pack 14 is attached to the side members 30 of the floor portion 18.

The battery pack 14 is positioned on the vehicle lower side relative to the cabin 16 and is configured to include a battery case 34 whose main part is configured by an aluminum alloy and a battery module 35 serving as a battery disposed inside the battery case 34. That is, the battery case 34 functions as a case for the battery module 35.

The battery case 34 includes a body portion 34A that houses the battery module 35 and a base portion 34B that configures a vehicle lower part of the battery case 34. Additionally, the battery case 34 is secured to the vehicle body 12 as a result of the base portion 34B being attached by attachment members (not shown the drawings) to the side members 30 in a state in which the main part of the body portion 34A is housed between the side members 30 and a state in which mount members 36 are interposed between the base portion 34B and the side members 30.

Furthermore, the battery case 34 is reinforced by inner side frames 38 serving as frames provided inside the battery case 34 and inner cross members 39 serving as reinforcement members.

The inner side frames 38 are each configured in a shape of a rectangular tube extending in the vehicle front-rear direction and are disposed at both inner side sides, in the vehicle width direction, of the battery case 34.

The inner cross members 39 are each configured in a shape of a rectangular tube extending in the vehicle width direction and couple vehicle upper parts of the inner side frames 38. Furthermore, as shown in FIG. 2, a position in a height direction of at least parts of the inner cross members 39 overlaps with the rockers 22 and the reinforcement members 32 when viewed in the vehicle width direction.

Furthermore, as shown in FIG. 4, a position in a height direction of a part of the battery module 35 overlaps with the rockers 22 when viewed in the vehicle width direction.

In the present embodiment, as shown in FIG. 1 and FIG. 2, the vehicle lower body structure has a first characteristic in that an impact absorption member 48 is configured to include an upper panel 40, a lower panel 42, upper sub-panels 44, and lower sub-panels 46 serving as reinforcement panels disposed inside each of the rockers 22. Furthermore, as shown in FIG. 3, the vehicle lower body structure has a second characteristic in that an impact absorption member 54 is configured to include an upper panel 50 and a lower panel 52 serving as reinforcement panels disposed inside each of the inner side frames 38 of the battery case 34.

As shown in FIG. 1, the upper panel 40 is formed by pressing a single steel sheet and overall extends in the vehicle front-rear direction. The upper panel 40 is configured by a plurality of upper constituent portions 40A, each having a V-shaped cross-sectional shape that is convex in the vehicle upward direction and open in the vehicle downward direction when viewed in the vehicle width direction, the upper constituent portions 40A ranging in the vehicle front-rear direction.

The lower panel 42 is formed by pressing a single steel sheet and overall extends in the vehicle front-rear direction. The lower panel 42 is configured by a plurality of lower constituent portions 42A, each having a V-shaped cross-sectional shape that is convex in the vehicle downward direction and open in the vehicle upward direction when viewed in the vehicle width direction, the lower constituent portions 42A ranging in the vehicle front-rear direction. Furthermore, the lower constituent portions 42A overlap with the upper constituent portions 40A when viewed in the vehicle up-down direction.

Additionally, planar portions 40B of the upper panel 40 that are provided in boundaries between the upper constituent portions 40A and planar portions 42B of the lower panel 42 that are provided in boundaries between the lower constituent portions 42A are joined to each other by joints (not shown in the drawings) formed by welding or the like.

Because of this, a plurality of first closed cross-sectional structural units 56 that include the upper constituent portions 40A and the lower constituent portions 42A interconnected in the vehicle up-down direction and whose cross-sections when viewed in the vehicle width direction are closed cross-sections and which extend in the vehicle width direction are disposed ranging in the vehicle front-rear direction. That is, the impact absorption member 48 can be regarded as the aggregate of the first closed cross-sectional structural units 56.

It will be noted that although in the present embodiment apex portions 40A1 of the upper constituent portions 40A and apex portions 42A1 of the lower constituent portions 42A are joined to the rocker inner panel 26 by joints (not shown in the drawings) formed by welding or the like, the apex portions 40A1 and the apex portions 42A1 may also be joined to the rocker outer panel 24.

The upper sub-panels 44 and the lower sub-panels 46, as shown in FIG. 2, are disposed in positions at which their positions in the height direction partly overlap with positions in the height direction of the cross members 28 and the inner cross members 39.

Specifically, the upper sub-panels 44 are disposed at the vehicle upper sides of the planar portions 40B of the upper panel 40 and are each configured to have a V-shaped cross-sectional shape that is convex in the vehicle upward direction and open in the vehicle downward direction when viewed in the vehicle width direction. Additionally, vehicle front and vehicle rear end portions of the upper sub-panel 44 are joined to the upper panel 40 by joints (not shown in the drawings) formed by welding or the like. Because of this, second closed cross-sectional structural units 58 whose cross-sections when viewed in the vehicle width direction are closed cross-sections and which extend in the vehicle width direction are configured.

The lower sub-panels 46 are disposed at the vehicle lower sides of the planar portions 42B of the lower panel 42 and are each configured to have a V-shaped cross-sectional shape that is convex in the vehicle downward direction and open in the vehicle upward direction when viewed in the vehicle width direction. Additionally, vehicle front and vehicle rear end portions of the lower sub-panels 46 are joined to the lower panel 42 by joints (not shown in the drawings) formed by welding or the like. Because of this, third closed cross-sectional structural units 60 whose cross-sections when viewed in the vehicle width direction are closed cross-sections and which extend in the vehicle width direction are configured. It will be noted that the second closed cross-sectional structural units 58 and the third closed cross-sectional structural units 60 are adjacent to each other in the vehicle up-down direction.

Furthermore, when viewed in the vehicle width direction a cross-sectional area of a space defined by each of the second closed cross-sectional structural units 58 and a cross-sectional area defined by each of the third closed cross-sectional structural units 60 are smaller than the cross-sectional area of the space defined by each of the first closed cross-sectional structural units 56. In other words, at each of the positions in the height direction at which the upper sub-panels 44 and the lower sub-panels 46 overlap with the cross members 28 and the inner cross members 39 when viewed in the vehicle width direction, the distribution density of the closed cross-sectional structural units in the rockers 22 is high.

The upper panel 50 disposed inside each of the inner side frames 38, as shown in FIG. 3, has the same configuration as the upper panel 40 and includes a plurality of upper constituent portions 50A ranging in the vehicle front-rear direction.

The lower panel 52 disposed inside each of the inner side frames 38 has the same configuration as the lower panel 42 and includes a plurality of lower constituent portions 52A ranging in the vehicle front-rear direction.

Additionally, planar portions 50B of the upper panel 50 that are provided in boundaries between the upper constituent portions 50A and planar portions 52B of the lower panel 52 that are provided in boundaries between the lower constituent portions 52A are joined to each other by joints (not shown in the drawings) formed by welding or the like.

Because of this, a plurality of fourth closed cross-sectional structural units 62 that include the upper constituent portions 50A and the lower constituent portions 52A interconnected in the vehicle up-down direction and whose cross-sections when viewed in the vehicle width direction are closed cross-sections and which extend in the vehicle width direction are disposed ranging in the vehicle front-rear direction. That is, the impact absorption member 54 can be regarded as the aggregate of the fourth closed cross-sectional structural units 62. It will be noted that the impact absorption member 54 is attached to the inner side frames 38 via joints (not shown in the drawings) formed by welding or the like.

### (Action and Effects of Present Embodiment)

Next, the action and effects of the present embodiment will be described.

In the present embodiment, as shown in FIG. 4, the battery module 35 is disposed at the vehicle lower side relative to the cabin 16. Additionally, the rocker 22 and the inner side frame 38 are disposed at the vehicle width direction outer side of the battery module 35, and the positions in the height direction of the parts of the rocker 22 and the inner side frame 38 overlap with the battery module 35 when viewed in the vehicle width direction. When an impact load in the vehicle width direction is input, the impact load is input to the rocker 22 and the inner side frame 38 before the battery module 35.

From the standpoint of protecting the battery module 35, it is preferred that the vehicle lower body structure have a configuration where the rocker 22 and the inner side frame 38 are able to absorb an impact in the vehicle width direction. For example, it is conceivable to employ a configuration where the insides of the rocker 22 and the inner side frame 38 are divided by plural partition wall portions extending in the vehicle front-rear direction to form impact absorption members inside the rocker 22 and the inner side frame 38.

However, in this configuration, it becomes difficult to maintain the cross-sectional shapes of the impact absorption members with respect to an impact load in the vehicle width direction because the impact absorption members extend in the vehicle front-rear direction. As a result, as deformation of the impact absorption member progresses, it is conceivable that the impact energy in the vehicle width direction that can be absorbed per unit length of the impact absorption members will become smaller. Namely, in this configuration, it becomes difficult to ensure the magnitude of impact energy in the vehicle width direction that can be absorbed per unit length with respect to an impact load in the vehicle width direction.

In the present embodiment, as shown in FIG. 1, the impact absorption member 48 provided inside each of the rockers 22 includes the first closed cross-sectional structural units 56 whose cross-sectional shapes when viewed in the vehicle width direction are closed cross-sections and which extend in the vehicle width direction. Furthermore, as shown in FIG. 3, the impact absorption member 54 provided inside each of the inner side frames 38 includes the fourth closed cross-sectional structural units 62 whose cross-sectional shapes when viewed in the vehicle width direction are closed cross-sections and which extend in the vehicle width direction.

When an impact load in the vehicle width direction is input to the rocker 22, the first closed cross-sectional structural units 56 compressively deform in the direction in which the impact load was input, that is, the direction in which the first closed cross-sectional structural units 56 extend and can absorb the impact load. Additionally, the cross-sectional shapes of the vehicle width direction inner parts of the first closed cross-sectional structural units 56 are maintained even when deformation of the impact absorption member 48 progresses, so the impact energy in the vehicle width direction that can be absorbed per unit length of the impact absorption member 48 can be inhibited from becoming smaller.

Furthermore, similarly also in the inner side frame 38, when an impact load in the vehicle width direction is input to the inner side frame 38, the fourth closed cross-sectional structural units 62 compressively deform in the direction in which the impact load was input, that is, the direction in which the closed cross-sectional structural units 62 extend and can absorb the impact load. Additionally, the cross-sectional shapes of the vehicle width direction inner parts of the fourth closed cross-sectional structural units 62 are maintained even when deformation of the impact absorption member 54 progresses, so the impact energy in the vehicle width direction that can be absorbed per unit length of the impact absorption member 54 can be inhibited from becoming smaller.

Furthermore, in the present embodiment, the impact absorption member 48 is provided inside each of the rockers 22. The impact absorption member 48 can be disposed without having to ensure a separate space in the vehicle body 12, and the space for disposing the battery module 35 can be inhibited from being encroached upon by the impact absorption member 48.

Furthermore, the impact absorption member 48 is configured to include the upper panel 40 and the lower panel 42 that are made of metal bent in the vehicle front-rear direction. The first closed cross-sectional structural units 56 can be configured by joining the upper panel 40 and the lower panel 42 to each other. As a result, the configuration of the impact absorption member 48 can be inhibited from becoming complicated, and flexibility for the configuration of the impact absorption member 48 can be ensured.

Furthermore, in the present embodiment, the vehicle upper part of the impact absorption member 48 is configured by the upper panel 40, and the vehicle lower part of the impact absorption member 48 is configured by the lower panel 42.

The upper panel 40 is configured by the plurality of upper constituent portions 40A, each having a predetermined cross-sectional shape that is convex in the vehicle upward direction and open in the vehicle downward direction when viewed in the vehicle width direction, being arrayed in the vehicle front-rear direction. The lower panel 42 is configured by the plurality of lower constituent portions 42A, each having a predetermined cross-sectional shape that is convex in the vehicle downward direction and open in the vehicle upward direction when viewed in the vehicle width direction and which overlap with the upper constituent portions 40A when viewed in the vehicle up-down direction, being arrayed in the vehicle front-rear direction.

Additionally, the first closed cross-sectional structural units 56 are configured to include the upper constituent portions 40A and the lower constituent portions 42A interconnected in the vehicle up-down direction as a result of the upper panel 40 and the lower panel 42 being joined to each other, and the plurality of first closed cross-sectional structural units 56 are configured by being arrayed in the vehicle front-rear direction. The plurality of first closed cross-sectional structural units 56 can be configured by the upper panel 40 and the lower panel 42, that is, two panels, which contributes to a reduction in the number of parts.

Furthermore, as shown in FIG. 2, at each of the positions at which the cross members 28 that configure a part of the floor portion 18 and extend in the vehicle width direction and the inner cross members 39 that configure a part of the battery case 34 and extend in the vehicle width direction overlap with the rockers 22 in the height direction when viewed in the vehicle width direction, the distribution density of the first to fourth closed cross-sectional structural units is high.

At the above-described positions in the rockers 22, rigidity for the impact absorption member 48 with respect to an impact load in the vehicle width direction can be ensured. Additionally, at the above-described positions in the rockers 22, an impact load in the vehicle width direction input to the rocker 22 can be transmitted via the impact absorption member 48 to the cross members 28 and the inner cross members 39. The impact load input to the rocker 22 can be dispersed to the floor portion 18 and the battery case 34.

In addition, the upper panel 40 and the lower panel 42 are joined to the rocker outer panel 24 or the rocker inner panel 26 of the rocker 22. The upper panel 40 and the lower panel 42 can be stably supported relative to the rocker. Furthermore, the rocker outer panel 24 and the rocker inner panel 26 can be joined to each other after the upper panel 40 and the lower panel 42 are joined to the rocker outer panel 24 or the rocker inner panel 26, so the process of manufacturing the rocker 22 can be inhibited from being changed.

In this way, in the present embodiment, the magnitude of impact energy that can be absorbed per unit length in the vehicle width direction with respect to an impact load in the vehicle width direction can be ensured.

### <Second Embodiment>

A second embodiment of the vehicle lower body structure pertaining to the present disclosure will be described below using FIG. 6. It will be noted that components identical to those of the first embodiment described above are assigned identical numbers and description thereof will be omitted.

In the vehicle lower body structure pertaining to the present embodiment, an upper panel 70 and a lower panel 72 serving as reinforcement panels bent in wavy line shapes when viewed in the vehicle width direction are disposed inside the rocker 22, and an impact absorption member 74 is configured to include these panels.

Specifically, vehicle lower apex portions 70A of the upper panel 70 and vehicle upper apex portions 72A of the lower panel 72 are joined to each other by joints (not shown in the drawings) formed by welding or the like. A plurality of first closed cross-sectional structural units 76 whose cross-sections when viewed in the vehicle width direction are closed cross-sections and which extend in the vehicle width direction are disposed ranging in the vehicle front-rear direction.

According to this configuration, basically the same action and effects as those of the first embodiment described above can be achieved. Furthermore, in the present embodiment, corner portions can be inhibited from forming in the upper panel 70 and the lower panel 72 when viewed in the vehicle width direction, and portions at which stress concentrates can be inhibited from forming in the upper panel 70 and the lower panel 72.

### <Third Embodiment>

A third embodiment of the vehicle lower body structure pertaining to the present disclosure will be described below using FIG. 7. It will be noted that components identical to those of the first embodiment described above are assigned identical numbers and description thereof will be omitted.

In the vehicle lower body structure pertaining to the present embodiment, a reinforcement panel 80 bent in a zigzag shape when viewed in the vehicle width direction is disposed inside the rocker 22, and upper and lower apex portions 80A of the reinforcement panel 80 are joined to the rocker 22 by joints (not shown in the drawings) formed by welding or the like. Because of this, a plurality of first closed cross-sectional structural units 82 whose cross-sections when viewed in the vehicle width direction are closed cross-sections and which extend in the vehicle width direction are formed by parts of the reinforcement panel 80 and parts of the rocker 22 and ranging in the vehicle front-rear direction.

An impact absorption member 84 is configured to include the reinforcement panel 80 and a part of the rocker 22.

According to this configuration, basically the same action and effects as those of the first embodiment described above can be achieved, excluding action and effects obtained by the upper sub-panels 44 and the lower sub-panels 46.

Furthermore, in the present embodiment, the apex portions 80A of the reinforcement panel 80 bent in a zigzag shape can be joined to the rocker 22. Effects on the rocker 22 caused by joining the reinforcement panel 80 and the rocker 22 to each other can be reduced, and the plurality of closed cross-sectional structural units 82 that are triangular when viewed in the vehicle width direction can be configured by the reinforcement panel 80 and the rocker 22.

### <Fourth Embodiment>

A fourth embodiment of the vehicle lower body structure pertaining to the present disclosure will be described below using FIG. 8. It will be noted that components identical to those of the first embodiment described above are assigned identical numbers and description thereof will be omitted.

In the vehicle lower body structure pertaining to the present embodiment, a reinforcement panel 90 bent in a square wave shape when viewed in the vehicle width direction is disposed inside the rocker 22, and upper and lower joint panel portions 90A of the reinforcement panel 90 whose thickness direction coincides with the vehicle up-down direction are joined to the rocker 22 by joints (not shown in the drawings) formed by welding or the like. A plurality of first closed cross-sectional structural units 92 whose cross-sections when viewed in the vehicle width direction are closed cross-sections and which extend in the vehicle width direction are formed by parts of the reinforcement panel 90 and parts of the rocker 22 and ranging in the vehicle front-rear direction.

An impact absorption member 94 is configured to include the reinforcement panel 90 and a part of the rocker 22.

According to this configuration, basically the same action and effects as those of the first embodiment described above can be achieved, excluding action and effects obtained by the upper sub-panels 44 and the lower sub-panels 46.

Furthermore, in the present embodiment, the joint panel portions 90A of the reinforcement panel 90 bent in a square wave shape can be joined to the rocker 22. The area of the parts at which the reinforcement panel 90 and the rocker 22 are joined to each other can be ensured, and the plurality of closed cross-sectional structural units 92 that are rectangular when viewed in the vehicle width direction can be configured by the reinforcement panel 90 and the rocker 22.

### <Fifth Embodiment>

A fifth embodiment of the vehicle lower body structure pertaining to the present disclosure will be described below using FIG. 9. It will be noted that components identical to those of the first embodiment described above are assigned identical numbers and description thereof will be omitted.

In the vehicle lower body structure pertaining to the present embodiment, a reinforcement panel 100 bent in a wavy line shape when viewed in the vehicle width direction is disposed inside the rocker 22, and upper and lower apex portions 100A of the reinforcement panel 100 are joined to the rocker 22 by joints (not shown in the drawings) formed by welding or the like. A plurality of first closed cross-sectional structural units 102 whose cross-sections when viewed in the vehicle width direction are closed cross-sections and which extend in the vehicle width direction are formed by parts of the reinforcement panel 100 and parts of the rocker 22 and ranging in the vehicle front-rear direction.

An impact absorption member 104 is configured to include the reinforcement panel 90 and a part of the rocker 22.

According to this configuration, basically the same action and effects as those of the first embodiment described above can be achieved, excluding action and effects obtained by the upper sub-panels 44 and the lower sub-panels 46.

Furthermore, in the present embodiment, the apex portions 100A of the reinforcement panel 100 bent in a wavy line shape can be joined to the rocker 22. Effects on the rocker 22 caused by joining the reinforcement panel 100 and the rocker 22 to each other can be reduced, and the plurality of closed cross-sectional structural units 102 can be configured by the reinforcement panel 100 and the rocker 22. Furthermore, in the present embodiment, corner portions can be inhibited from forming in the reinforcement panel 100 when viewed in the vehicle width direction, and therefore portions at which stress concentrates can be inhibited from forming in the reinforcement panel 100.

### <Supplemental Description of Above Embodiments>

(1) In the embodiments described above, the impact absorption member is configured to include the reinforcement panel inside the rockers 22 and the reinforcement panel inside the inner side frames 38, but the configuration of the impact absorption member is not limited to this. For example, depending on the specifications of the vehicle 10 for example, each of the closed cross-sectional structural units may be configured by an extruded member made of an aluminum alloy and extending in the vehicle width direction, and the impact absorption member may be configured by disposing one or a plurality of the extruded members inside the rockers 22 and inside the inner side frames 38.
(2) Furthermore, in the embodiments described above, the impact absorption member is provided in the rockers 22 and the inner side frames 38 but depending on the specifications of the vehicle 10 and the specifications of the battery pack 14 for example, a configuration where the impact absorption member is provided in at least one of the rockers 22 and the inner side frames 38 may also be employed.

## Claims

1. A vehicle lower body structure, comprising:
a battery (35) disposed at a vehicle lower side relative to a vehicle cabin (16);
a frame (22, 38) disposed at an outer side, in a vehicle width direction, of the battery (35), a position in a height direction of a part of the frame (22, 38) overlapping with the battery when viewed in the vehicle width direction; and
an impact absorption member (48, 54, 74), provided inside the frame (22, 38) and including closed cross-sectional structural units (56, 76) whose cross-sectional shapes, when viewed in the vehicle width direction, are closed cross-sections, the closed cross-sectional structural units (56, 92, 76) extending in the vehicle width direction.

2. The vehicle lower body structure of claim 1, wherein the frame (22, 38) comprises a rocker (22) that configures a part of a vehicle body lower portion and that extends in a vehicle front-rear direction, and the impact absorption member (48, 74) is provided inside the rocker (22).

3. The vehicle lower body structure of claim 2, wherein the impact absorption member (48, 74) includes a reinforcement panel (40, 42; 70, 72) made of metal and bent in the vehicle front-rear direction.

4. The vehicle lower body structure of claim 3, wherein:
the reinforcement panel (40, 42) includes an upper panel (40) configuring a vehicle upper part of the impact absorption member (48) and a lower panel (42) configuring a vehicle lower part of the impact absorption member (48),
the upper panel (40) is configured by a plurality of upper constituent portions (40A), each having a predetermined cross-sectional shape that is convex in a vehicle upward direction and open in a vehicle downward direction when viewed in the vehicle width direction, the upper constituent portions (40A) being arrayed in the vehicle front-rear direction,
the lower panel (42) is configured by a plurality of lower constituent portions (42A), each having a predetermined cross-sectional shape that is convex in the vehicle downward direction and open in the vehicle upward direction when viewed in the vehicle width direction, the lower constituent portions (42A) being arrayed in the vehicle front-rear direction, with the convex shapes of the upper constituent portions (40A) and the convex shapes of the lower constituent portions (42A) overlapping with each other when viewed in a vehicle up-down direction, and
a plurality of the closed cross-sectional structural units (56, 58, 60) including the upper constituent portions (40A) and the lower constituent portions (42A) interconnected in the vehicle up-down direction, as a result of the upper panel (40) and the lower panel (42) being joined to each other, are arrayed in the vehicle front-rear direction.

5. The vehicle lower body structure of claim 2, wherein the closed cross-sectional structural units (58, 60) are distributed at a higher density at a position at which the rocker (22) overlaps in the height direction, when viewed in the vehicle width direction, with at least one of a cross member (28), which configures a part of the vehicle body lower portion and which extends in the vehicle width direction, or a reinforcement member (39), which configures a part of a battery case (34) for the battery (35) and which extends in the vehicle width direction.

6. The vehicle lower body structure of claim 3, wherein the impact absorption member (84) includes the reinforcement panel (80), which is bent in a zigzag shape when viewed in the vehicle width direction.

7. The vehicle lower body structure of claim 3, wherein the impact absorption member (94) includes the reinforcement panel (90), which is bent in a square wave shape when viewed in the vehicle width direction.

8. The vehicle lower body structure of claim 3, wherein the impact absorption member (104) includes the reinforcement panel (100), which is bent in a wavy line shape when viewed in the vehicle width direction.

9. The vehicle lower body structure of claim 3, wherein:
the rocker (22) includes a rocker outer panel (24) that configures a vehicle width direction outer part of the rocker (22) and a rocker inner panel (26) that configures a vehicle width direction inner part of the rocker (22), and
the reinforcement panel (40, 42) is joined to the rocker outer panel (24) or the rocker inner panel (26).
